# EUROPEAN PATENT SPECIFICATION

(11) **EP 4 048 091 B1**
(45) Date of publication and mention of the grant of the patent: **13.09.2023**
(21) Application number: 20790024.2
(22) Date of filing: 20.10.2020
(51) Int. Cl.: A23J 3/14, A23J 3/22, A23L 33/115, A23L 33/185

(54) **MINCED MEAT ANALOGUE**
HACKFLEISCHANALOG
ANALOGUE DE VIANDE HACHÉE

(30) Priority: 21.10.2019 EP 19204323; 21.10.2019 EP 19204310; 21.10.2019 EP 19204338; 21.10.2019 EP 19204353
(43) Date of publication of application: 31.08.2022
(73) Proprietor: Unilever IP Holdings B.V., 3013 AL Rotterdam (NL)
(72) Inventor: BOM, Paul, 4824 AV Breda (NL); MELLEMA, Michel, 6708 WH Wageningen (NL)
(74) Representative: Tjon, Hon Kong Guno
(86) International application number: PCT/EP2020/079428
(87) International publication number: WO 2021/078704

(56) References cited:
- EP-A1- 3 508 067
- WO-A1-2018/189738
- WO-A1-2019/120982
- US-A- 4 376 134
- US-A1- 2015 056 346
- YCW: "Fatty Acid Composition of Palm Oil, Palm Oil Fractions and Palm Kernel Oil", , 3 February 2014 (2014-02-03), XP002798589, Retrieved from the Internet: URL:https://oilpalmblog.wordpress.com/2014 /02/03/2-fatty-acid-composition-of-palm-oi l-palm-oil-fractions-and-palm-kernel-oil/ [retrieved on 2020-04-02]

## Description

### Field of the invention

The present invention relates to a minced meat analogue, to a method of preparing such a minced meat analogue for consumption and to a process of producing such a meat analogue. Examples of minced meat analogues according to the present invention include vegetarian ground meat as well as vegetarian ground meat formed into patties (e.g. vegetarian hamburgers) or balls (e.g. vegetarian meat balls).

### Background of the invention

A burger (or hamburger) is a cooked patty of minced (or ground) meat, usually beef, that is typically placed inside a sliced bread roll or bun. The patty may be fried or grilled. Hamburgers are often served with cheese, lettuce, tomato, onion, pickles, bacon, or chilli; condiments such as ketchup, mayonnaise, mustard, relish, or "special sauce"; and are frequently placed on sesame seed buns.

Since the term "burger" usually implies beef, for clarity "burger" may be prefixed with the type of meat or meat substitute used, as in beef burger, turkey burger, chicken burger, fish burger or veggie burger.

A veggie burger (or vegetarian burger) is a burger patty that does not contain meat. These burgers may be made from ingredients like beans, especially soybeans and tofu, nuts, grains, seeds, algae or fungi such as mushrooms or mycoprotein. US 4 376 134 discloses a process for producing a simulated sausage product with a binder system consisting of egg white solids and sodium caseinate.

EP3508067A1 discloses the preparation of a v egetable meat substitute comprising a) mixing at least one colouring agent with water, to obtain a liquid colour blend; b) providing a solid extruded plant protein material; c) mixing the liquid colour blend of step a) and the solid extruded protein material of step b); d) hydrating the solid extruded plant protein and liquid colour blend mixture for a period of time sufficient for the solid extruded plant protein to absorb the liquid to, obtain a hydrated coloured protein; e) adding a vegetable fat to the hydrated coloured protein, said vegetable fat is solid at room temperature; and f) performing the steps a) to e) at ambient temperatures or lower.

WO2018/189738A1 discloses the preparation of an hybrid duck-like burger from ingredients comprising soy protein, textured wheat protein, soy protein isolate, adipocytes cells, water, coconut oil, duck flavor, canola oil, corn starch, and dextrose.

US4376134A discloses a process for the production of meat-like products from proteinaceous raw materials consisting of the following steps: a. providing an aqueous mixture of ingredients selected from the group consisting of water, flavors, spices, coloring agents and combinations thereof; b. providing a dry mixture of ingredients selected from egg white solids, non-fat dry milk, sodium caseinate, sugar and combinations thereof; c. admixing textured protein with the aqueous mixture thereby forming a first admixture; d. forming a second admixture by admixing with said first admixture a blend of fats and oils; e. admixing the dry mixture with the second admixture thereby forming a third admixture; and f. adjusting the third admixture to a temperature of 60°F or lower and mixing until distinct solid fat particles are seen in the mix. US2015/056346 A1 discloses a method of producing a plant-based food product comprising the following steps: (a) hydrating texturized protein particles with water and one or more heat denaturable soluble proteins to obtain hydrated plant protein particles; (b) adding a binding and thickening water solution to the hydrated plant protein particles so as to create a formable mass; (c) adding fat material to the formable mass; (d) after the addition of fat, forming the formable mass or one or more portions thereof into the food product.

### Summary of the invention

The inventors have developed a minced meat analogue that can be cooked in the same way as ordinary minced meat to produce a cooked minced meat analogue that in terms of eating quality and appearance is very similar to meat-based reference products. The minced meat analogue of the present invention is easy to manufacture and can be stored in frozen form until it is prepared for consumption.

A first aspect of the invention relates to minced meat analogue comprising the following components:
(a) 30-80% by weight of the minced meat analogue of hydrated textured vegetable protein (TVP) pieces;
(b) 20-45% by weight of the minced meat analogue of a binder emulsion containing the following ingredients:
   (b1) 8-50% by weight of the binder emulsion of liquid oil having a saturated fatty acid content of less than 30 wt.%
      (b2) 8-50% by weight of the binder emulsion of particles of solid fat having a saturated fatty acid content of more than 50 wt.; whereby said solid fat in the particles of solid fat has a solid fat content at 30°C of at least 25%, more preferably of at least 30% as determined using ISO method 8292-1:2008;
      whereby preferably at least 80 wt.% of the particles of solid fat in the binder emulsion have a particle size, as determined by laser diffraction, of in the range of 30-350 µm.
   (b3) 25-70% by weight of the binder emulsion of water;
      wherein the combination of ingredients (b1), (b2) and (b3) constitutes at least 70 wt.%, preferably at least 80 wt.% of the binder emulsion;
   wherein the combination of components (a) to (b) constitutes at least 80 wt.%, preferably at least 90 wt.% of the minced meat analogue and preferably the protein content of the minced meat analogue lies in the range of 10-20%, more preferably in the range of 12-18% by weight of the minced meat analogue.

The minced meat analogue of the present invention comprises TVP pieces and a binder emulsion that contains water, oil and fat particles. The binder emulsion can act as a lubricant and a glue that allows for the preparation of a coherent dough that can be pumped and shaped into a patty or a ball and does not fall apart during storage, handling and preparation. In addition, the binder emulsion has a major impact on the eating quality of the cooked minced meat analogue as it affects important quality attributes such as succulence, bite, oily mouthfeel and in-mouth flavour release.

Unlike known the minced meat analogues, the minced meat analogue of the present invention contains liquid oil and solid fat as separate components. In the preparation of meat analogues, it is common practice to thoroughly blend liquid oil with molten solid fat before combining it with other food ingredients at a temperature above the melting point of the fat blend, so that upon cooling of the product mixture the solid fat can form a crystalline matrix that prevents oil exudation. This phenomenon is also used to avoid oil separation in margarines and shortenings.

The inventors have unexpectedly discovered that solid fat particles and liquid oil can be applied in the binder emulsion of the present minced meat analogue in the amounts indicated above, without causing significant oil exudation. In addition, it was found that the presence of both liquid oil and solid fat in the binding emulsion enables the preparation of the minced meat analogue at ambient or below ambient temperatures as both the fat particles and the liquid oil can easily be dispersed throughout the product mass during mixing. In contrast thereto, a blend of solid fat and liquid oil cannot easily be dispersed as such a blend is a semi-solid mass at ambient temperature. In order to disperse such a semi-solid mass, high shear conditions need to be applied that have an adverse effect on the structure of the minced meat analogue. An important advantage associated with the preparation of the minced meat analogue at near ambient temperature resides in the fact that oxidation of the unsaturated fatty acids in the liquid oil is effectively minimised.

A second aspect of the invention relates to a method of preparing the aforementioned minced meat analogue for consumption, said method comprising frying or grilling said minced meat analogue.

A third aspect of the invention relates to a process of preparing the aforementioned minced meat analogue, said process comprising:
- mixing textured vegetable protein (TVP) particles with water to produce hydrated TVP pieces;
- mixing the hydrated TVP pieces with water, solid fat powder and liquid oil to produce a vegetarian dough whilst maintaining the temperature of the mixture below the melting point of the solid fat.

### Detailed description of the invention

The words 'comprising' and 'containing' as used herein should not be interpreted restrictively as meaning 'consisting of'. In other words, besides the features listed after these words, non-listed features may be present.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition. Also, unless indicated otherwise, weight percentages as based on wet weight.

The term "water content" as used herein, unless indicated otherwise, relates to the total water content.

The term "minced meat analogue" as used herein refers to a vegetarian product that has an appearance and structure similar to that of minced meat. More particularly, like minced meat, the minced meat analogue of the present invention is largely (≥ 50 wt.%) composed of small pieces of elastic material that are wetted on the outside by an aqueous liquid. The term "minced meat analogue" also encompasses products shaped from such minced meat analogue, such as patties and balls.

The term "textured or texturized vegetable protein (TVP)" as used herein refers to a food ingredient made from edible protein sources and characterised by having structural integrity and identifiable texture such that each unit will withstand hydration in cooking and other procedures used in preparing the food for consumption. TVP is typically produced by extrusion.

The terms "oil" and "fat" as used herein refer to a glyceride component that contains at least 80 wt.% of glycerides selected from triglycerides, diglycerides and combinations thereof.

The term "liquid oil" as used herein refers to an oil that contains no solid at 20°C (N₂₀ = 0%). The solid fat content at 20°C can be determined using ISO method ISO 8292-2:2008.

The term "solid fat" as used herein refers to a fat that contains at least 20% solid fat at 20°C (N₂₀ ≥20%).

The term "non-denatured" as used herein in relation to proteins refers to proteins that still have the secondary structure which is present in their native state.

The term "dry matter" as used herein refers to the matter that remains after water and other volatile components have been removed by evaporation using a forced-air oven (2 hours at 103°C, or longer if not all moisture has been removed).

The liquid oil and the solid fat particles are present in the minced meat analogue as separate components. A fraction of the solid fat particles may be captured as distinguishable fat particles in droplets of liquid oil, thereby reducing the liquidity of these oil droplets.

Besides the hydrated TVP pieces and the binder emulsion the minced meat analogue may contain other ingredients in the form of particulate material having a particle weight of at least 1 mg. Pieces of vegetable or spices are an example of such a particulate material.

The minced meat analogue of the present invention is preferably uncooked, allowing local preparation of the cooked minced meat analogue using conventional cooking techniques such as grilling and frying. Here "uncooked" means that the complete minced meat analogue, i.e. the minced meat analogue as whole, has not been heated to temperatures in excess of 60°C. Ingredients of the minced meat analogue, such as the TVP pieces, however, may have been heated to temperatures in excess of 60°C during the production thereof.

In another advantageous embodiment, the minced meat analogue is frozen. More preferably the minced meat analogue is a frozen uncooked minced meat analogue. Most preferably, the minced meat analogue is frozen uncooked minced meat analogue shaped in the form of a patty or a ball. Frozen distribution and storage offers the advantage that, especially when the minced meat analogue is uncooked, the product can be stored for a long time until it is prepared for consumption. The 'meaty' character of the minced meat analogue of the present invention is well retained during frozen storage.

The minced meat analogue of the present invention may contain animal products other than meat, such as egg and dairy products.

According to a preferred embodiment, the minced meat analogue is shaped, e.g. in the form of a patty or a ball.

The shaped minced meat analogue preferably has an open structure, i.e. the interior of the shaped product comprises small spaces that are filled with air.

According to a particularly preferred embodiment, the minced meat analogue is shaped in the form of a patty having a weight of 60-200 grams, more preferably of 90-140 grams. Preferably, the patty has an average diameter in the range of 80-150 mm and an average height in the range of 5-15 mm.

The water content of the minced meat analogue typically lies in the range of 50-70%, more preferably in the range of 55-65% by weight of the minced meat analogue.

The protein content of the minced meat analogue preferably lies in the range of 10-20%, more preferably in the range of 12-18% by weight of the minced meat analogue.

Preferably, at least 70 wt.%, more preferably at least 80 wt.% of the total amount of protein of the minced meat analogue is plant protein selected from soy protein, legume protein, wheat protein, rice protein and combinations thereof. Examples of legume proteins that can be used include lentil protein, pea protein, fababean protein, lupin protein and combinations thereof.

According to a particularly preferred embodiment, at least 50 wt.%, more preferably at least 60 wt.% and most preferably at least 75 wt.% of the total amount of protein of the minced meat analogue is soy protein.

The total fat content of the minced meat analogue preferably lies in the range of 8-22%, more preferably in the range of 10-20% by weight of the minced meat analogue.

The total amount of fat contained in the minced meat analogue typically has the following fatty acid composition:
20-40 wt.% palmitic acid;
0-20 wt.% stearic acid;
12-60 wt.% oleic acid;
10-50 wt.% polyunsaturated fatty acid;
wherein the total amount of saturated fatty acids does not exceed 50 wt.%. The fatty acid composition of the fat can be determined using ISO method 12966-4: 2015.

The minced meat analogue preferably contains 1-5%, more preferably 1.5-3.5% by weight of the minced meat analogue of dietary fiber.

Calculated by weight of the dry matter of the minced meat analogue, the minced meat analogue preferably contains 3-15 wt.%, most preferably 4-9 wt.% of dietary fiber.

Carbohydrates are preferably contained in the minced meat analogue in a concentration of 1-8%, more preferably 2-6% by weight of the minced meat analogue of carbohydrates.

Calculated by weight of the dry matter of the minced meat analogue, the minced meat analogue preferably contains 2-20 wt.%, most preferably 4-15 wt.% of carbohydrates.

The starch content of the minced meat analogue, calculated by weight of the dry matter of the minced meat analogue, preferably lies in the range of 2-18 wt.%, more preferably in the range of 3-14 wt.%.

Preferably, the minced meat analogue contains, calculated by weight of the dry matter of the minced meat analogue, 0-4% sugars, most preferably 0-2% sugars.

The minced meat analogue of the present invention preferably contains 0.2-3%, more preferably 0.3-2 salt by weight of the minced meat analogue. Here the term salt refers to sodium chloride, potassium chloride and combinations thereof.

The pH of the minced meat analogue preferably lies in the range of pH 5 to pH 7.5, more preferably in the range of pH 5.8 to pH 6.8.

In a preferred embodiment, the minced meat analogue contains 40-75%, more preferably 50-72% by weight of the minced meat analogue of the hydrated TVP pieces.

The hydrated TVP pieces can be prepared by soaking dry TVP particles with water. Dry TVP particles are commercially available. These dry TVP particles are typically produced by extrusion cooking and drying.

The hydrated TVP pieces in the minced meat analogue typically have a water content of at least 50%, more preferably of 60-78% by weight of the hydrated TVP pieces.

Protein is preferably contained in the hydrated TVP pieces in a concentration, calculated by weight of the dry matter of the hydrate TVP pieces, of at least 50 wt.%, more preferably of at least 60 wt.%, most preferably of at least 62 wt.%.

The hydrated TVP pieces present in the minced meat analogue can have different shapes, such as sphere-like, fiber-like and sheet-like.

The hydrated TVP pieces in the minced meat analogue typically contain, calculated by weight of the dry matter of the hydrated TVP pieces, 50-80 wt.% protein, 0-5 wt.% fat and 3-30 wt.% dietary fiber. More preferably, the hydrated TVP pieces in the minced meat analogue contain, calculated by weight of the dry matter of the hydrated TVP pieces, 65-75 wt.% protein, 0.5-4 wt.% fat and 6-24 wt.% dietary fiber.

Preferably, at least 80 wt.%, more preferably at least 90 wt.% of the total amount of protein of the hydrated TVP pieces is plant protein selected from soy protein, legume protein, wheat protein, rice protein and combinations thereof. Examples of legume proteins that can be used include lentil protein, pea protein, faba_bean protein, lupin protein and combinations thereof.

In a more preferred embodiment, at least 80 wt.%, more preferably at least 90 wt.% and most preferably at least 95 wt.% of the total amount of protein of the hydrated TVP pieces is protein selected from soy protein, pea protein, gluten and combinations thereof.

According to a particularly preferred embodiment, at least 70 wt.%, more preferably at least 80 wt.%, most preferably at least 85 wt.% of the total amount of protein of the hydrated TVP pieces is soy protein.

The minced meat analogue preferably comprises 18-48%, more preferably 20-45% and most preferably 25-42% by weight of the minced meat analogue, of the binder emulsion containing water, liquid oil and solid fat particles.

The water content of the binder emulsion preferably lies in the range of 28-60%, more preferably in the range of 30-50% by weight of the binder emulsion.

According to a preferred embodiment, the binder emulsion contains 1-15%, more preferably 2-12% and most preferably 3-10% by weight of the binder emulsion of a heat-gelling binder selected from non-denatured patatin, non-denatured glycinin, non-denatured legumin, non-denatured egg protein, methyl cellulose and combinations thereof. The application of the heat-gelling binder in the binder emulsion offers the advantage that a firm product can be made that will withstand handling, that can easily be shaped/moulded and that provides a pleasant bite upon consumption.

The heat-gelling binder of the binder emulsion advantageously includes methyl cellulose. Preferably, the binder emulsion contains 1-12%, more preferably 2-10% and most preferably 3.0-8.0% by weight of the binder emulsion of methyl cellulose.

The minced meat analogue preferably contains, calculated by weight of the dry matter of the minced meat analogue, 2.5-10 wt.%, more preferably 3.0-9.0 wt.%, most preferably 5.0-8.0 wt.% of methyl cellulose.

The methyl cellulose employed in accordance with the present invention preferably has a methoxyl content of 20% to 40%, more preferably of 24% to 36%.

In another preferred embodiment, the methyl cellulose employed has a viscosity at a temperature of 20°C and a concentration of 2 wt.% in water of 20,000-1,000,000 cP, more preferably of 30,000-500,000 cP and most preferably of 35,000-200,000 cP.

The molecular weight of the methyl cellulose preferably lies in the range of 100 to 250 kDa, more preferably in the range of 150 to 220 kDa.

According to a preferred embodiment, the methyl cellulose has a gelation temperature of at least 30°C, more preferably a gelation temperature in the range of 35°C to 60°C, most preferably a gelation temperature in the range of 40°C to 50°C.

According to another preferred embodiment, the binder emulsion contains 0.3-8%, more preferably 0.5-6% and most preferably 0.6-4% by weight of the binder emulsion of non-denatured plant protein selected from non-denatured patatin, non-denatured glycinin, non-denatured legumin, and combinations thereof.

Methyl cellulose and non-denatured plant protein, selected from non-denatured patatin, non-denatured glycinin, non-denatured legumin, and combinations thereof, are typically present in the minced meat analogue in a weight ratio of 1:1 to 8:1. More preferably, methyl cellulose and the non-denatured plant protein are present in the minced meat analogue in a weight ratio of 3:2 to 6:1.

The water content of the binder emulsion preferably lies in the range of 28-65%, more preferably of 32-60% by weight of the binder emulsion.

The fat content of the binder emulsion preferably lies in the range of 30-68%, more preferably of 35-65% by weight of the binder emulsion.

The binder emulsion preferably contains 10-40%, more preferably 12-30% by weight of the binder emulsion of the liquid oil.

The binder emulsion preferably contains 10-40%, more preferably 15-32% by weight of the binder emulsion of the particles of solid fat.

According to a particularly preferred embodiment, the fat that is contained in the binder emulsion comprises, calculated by weight of said fat, (i) 25-75 wt.% liquid oil having a saturated fatty acid content of less than 30 wt.% and (ii) 25-75 wt.% particles of solid fat having a saturated fatty acid content of more than 50 wt.%. Even more preferably, the fat of the binder emulsion comprises, calculated by weight of said fat, (i) 30-60 wt.% of the liquid oil and (ii) 40-70 wt.% of the particles of solid fat.

The combination of the liquid oil and the particles of solid fat preferably constitutes at least 80 wt.%, more preferably at least 90 wt.% and most preferably at least 95 wt.% of the fat of the binder emulsion.

The liquid oil preferably contains less than 25 wt.%, more preferably less than 20 wt.% saturated fatty acids.

Preferably, the liquid oil contains at least 30 wt.% of polyunsaturated fatty acids, more preferably at least 50 wt.% of polyunsaturated fatty acids.

The liquid oil is preferably selected from sunflower oil, soybean oil, rapeseed oil, cottonseed oil, safflower oil, olive oil, linseed oil, corn oil and combinations thereof.

The solid fat present in the particles of solid fat is preferably selected from palm stearin, palm mid fraction, hydrogenated vegetable oils and combinations thereof. Most preferably, the solid fat is selected from palm stearin, palm mid fraction and combinations thereof.

The solid fat in the particles of solid fat has a solid fat content at 30°C of at least 25%, more preferably of at least 30% as determined using ISO method 8292-1:2008.

The solid fat in the particles of solid fat typically has a slip melting point of at least 45°C, more preferably a slip melting point of at least 48°C as determined using ISO method 6321:2002.

The liquid oil and the particles of solid fat are preferably present in the binder emulsion in a weight ratio that lies in the range of 1:3 to 3:1, more preferably in the range of 1:2 to 2:1.

The combined total amount of liquid oil and particles of solid fat typically constitutes 25-70% by weight, more preferably 30-60% by weight of the binder emulsion.

In accordance with a preferred embodiment, at least 80 wt.% of the particles of solid fat in the binder emulsion have a particle size, as determined by laser diffraction, of in the range of 30-350 µm.

Preferably, the minced meat analogue comprises added caramelised material selected from caramel, burnt sugar, malt extract and combinations thereof. More preferably, the minced meat analogue comprises 0.01-1%, by weight of the minced meat analogue of the caramelized material.

The term "caramel" as used herein, unless indicated otherwise, refers to a water-soluble food colouring that is made by heating carbohydrates either alone or in the presence of acids, alkalis, and/or salts. Carbohydrates used the commercial production of caramel colouring include fructose, glucose, invert sugar, sucrose, malt syrup, molasses, starch hydrolysates, and fractions thereof. The acids that may be used are sulfuric, sulfurous, phosphoric, acetic, and citric acids; the alkalis are ammonium, sodium, potassium, and calcium hydroxides; and the salts are ammonium, sodium, and potassium carbonate, bicarbonate, phosphate (including mono- and dibasic), sulfate, and bisulfite. Internationally, the United Nations Joint Food and Agriculture Organization/World Health Organization Expert Committee on Food Additives (JECFA) recognizes four classes of caramel colour, differing by the reactants used in their manufacture, each with its own INS and E number:

| Class | INS/E number | Description |
|---|---|---|
| I | 150a / E 150a | Plain caramel |
| II | 150b / E 150b | Caustic sulfite caramel |
| III | 150c / E 150c | Ammonia caramel |
| IV | 150d / E 150d | Sulfite ammonia caramel |

The term "burnt sugar" as used herein refers to caramalised sugar, also known as "caramel sugar", that has been produced by heating sugar without the use of chemical reactants that are used in the production of the above mentioned caramel colourings.

The caramelised material applied in the minced meat analogue preferably is caramel, burnt sugar or a combination thereof. According to a particularly preferred embodiment, the caramel material employed in the binder suspension is burnt sugar. Typically, the burnt sugar has a sugar content of at least 80 wt.%, more preferably of at least 90 wt.%, calculated by weight of the burnt sugar.

According to a particularly preferred embodiment, the minced meat analogue contains vegetable carbon. Here, the term "vegetable carbon" refers to particles of carbonized vegetable material. According to a preferred embodiment, the vegetable carbon is a form of finely divided carbon produced by steam activation of carbonized raw material of vegetable origin that has been assigned E number E 153. Preferably, the minced meat analogue contains 0.01-0.3%, more preferably 0.02-0.2% by weight of the minced meat analogue of vegetable carbon.

According to a particularly preferred embodiment, the vegetable carbon is contained in the binder emulsion.

Preferably, not more than 20 wt.%, more preferably not more than 10 wt.% of the vegetable carbon of the minced meat analogue is contained within the hydrated TVP pieces.

The vegetable carbon preferably has a particle size distribution, determined by laser diffraction, that meets the following condition: at least 80 wt.% of the carbon particles has a size within the range of 0.5 and 50 µm. Vegetable carbon may suitably be introduced in the form of a suspension.

Another aspect of the invention relates to a method of preparing a minced meat analogue as described herein before for consumption, said method comprising frying or grilling said minced meat analogue.

In accordance with a particularly preferred embodiment, the minced meat analogue is shaped in the form of a patty and is prepared for consumption by frying or grilling the patty to produce a cooked patty and placing the cooked patty inside a cut bun.

Yet another aspect of the invention relates to a process of preparing the aforementioned minced meat, said process comprising:
- mixing textured vegetable protein (TVP) particles with water to produce hydrated TVP pieces;
- mixing the hydrated TVP pieces with water, solid fat powder and liquid oil to produce a vegetarian dough whilst maintaining the temperature of the mixture below the melting point of the solid fat.

The present process of preparing a minced meat analogue preferably yields a minced meat analogue as described herein before.

Preferably, in the present process, the hydrated TVP particles and water are mixed in a weight ratio that lies in the range of 2:1 to 12:1, more preferably in the range of 3:1 to 6:1.

According to a further preferred embodiment, in the present process, the combination of solid fat powder and liquid oil is mixed with the hydrated TVP particles in a weight ratio of 1:12 to 1:2.5, more preferably in the range of 1:8 to 1:3.

The solid fat powder and liquid oil are preferably employed in the present process in a weight ratio of 1:3 to 3:1, more preferably in a weight ratio of 1:2 to 2:1.

The TVP particles employed in the present method preferably have a water content, calculated by weight of the TVP particles, of not more than 15 wt.%, more preferably of not more than 12 wt.%, most preferably of not more than 10 wt.%.

The TVP particles preferably contain, calculated by weight of the dry matter contained therein, 50-80 wt.% protein, 0-5 wt.% fat and 3-30 wt.% dietary fiber. More preferably, the TVP particles contain, calculated by weight of the dry matter that is contained therein, 65-75 wt.% protein, 0.5-4 wt.% fat and 6-24 wt.% dietary fiber.

Preferably, at least 80 wt.%, more preferably at least 90 wt.% of the total amount of protein of the TVP particles is plant protein selected from soy protein, legume protein, wheat protein, rice protein and combinations thereof. Examples of legume proteins that can be used include lentil protein, pea protein, fababean protein, lupin protein and combinations thereof
In a more preferred embodiment, at least 80 wt.%, more preferably at least 90 wt.% and most preferably at least 95 wt.% of the total amount of protein of the TVP particles is protein selected from soy protein, pea protein, gluten and combinations thereof.

According to a particularly preferred embodiment, at least 70 wt.%, more preferably at least 80 wt.%, most preferably at least 85 wt.% of the total amount of protein of the TVP particles is soy protein.

The hydrated TVP particles are preferably prepared by mixing 1 part by weight of the TVP particles with 1.5 to 3 parts by weight of water.

The hydrated TVP pieces, liquid oil and the solid fat employed in the present process preferably are as specified herein before.

In accordance with a preferred embodiment, at least 80 wt.% of the particles of solid fat powder employed in the process has a particle size, as determined by laser diffraction, in the range of 35-350 µm.

In accordance with a preferred embodiment, the mixing of the hydrated TVP pieces with water, fat powder and liquid oil is carried out in a device that does not exert high shear conditions. Accordingly, in a preferred embodiment, a paddle mixer, a conical screw mixer or a bowl mixer is used in mixing step ii.

According to a particularly preferred embodiment, during step ii of the present process, the ingredients of the patty are kept at a temperature in the range of -5°C to 30°C, more preferably in the range of -3°C to 20°C, most preferably in the range of -2°C to 16°C.

In a preferred embodiment, the mixture obtained in step ii is frozen and packaged, optionally after having been shaped, e.g. in the form of a patty or a ball.

According to a particularly preferred embodiment, the mixture obtained in step ii is shaped into patties or balls of 60-200 grams. Preferably, when shaped, the mixture obtained in step ii has a temperature in the range of -5°C to 20°C, more preferably in the range of -3°C to 15°C, most preferably in the range of -2°C to 12°C.

The present invention is further illustrated by the following non-limiting examples.

### Examples

### Example 1

Vegetarian burgers according to the present invention were prepared on the basis of the recipe shown in Table 1.

**Table 1**

| | Wt. % |
|---|---|
| TVP Contex 300 ¹ | 19.14 |
| Methocel Bind 250 ² | 2.20 |
| Egg protein powder | 1.00 |
| Z-K5000 Rudinblack ³ | 0.05 |
| Pepper | 0.20 |
| Salt | 0.40 |
| Caramel sugar NCS23P ⁴ | 0.15 |
| Flavourinq | 1.20 |
| JFI Palmstearin 54 LT (MB) ⁵ | 9.00 |
| Sunflower oil | 7.00 |
| Water | 59.66 |

| | |
|---|---|
| 1 Textured vegetable protein; Solbar Ningbo Protein Technology, Ningbo, China (68 wt.% protein, 8 wt.% moisture) 2 Methyl cellulose; The Dow Chemical Company 3 Vegetable Carbon (E 153); Huijbregts Groep, the Netherlands 4 Huijbregts Groep, the Netherlands 5 Palm stearin powder (melting point 51-55 °C), Juchem Food, Germany (the remaining ingredients were obtained in Europe) | |

The burgers were prepared on lab-scale using the following procedure:
- 1.914 kg of the textured vegetable protein was mixed with 2.35 kg tap water (10°C) in a vacuum bag. This pre-determined amount of water is sufficient to fully hydrate the textured vegetable protein. The bag was sealed and stored at 7 °C;
- After 1 hour of hydration at 7 °C, the hydrated textured vegetable protein was introduced in a Kenwood mixer. The potato protein and the egg protein powder were added, followed by mixing for 2 minutes at low speed (speed 2);
- The remainder of the water was added, followed by mixing for 20 seconds;
- The vegetable carbon and the caramel sugar were added, followed by mixing for 20 seconds;
- Flavouring, spices and salt were added, followed by mixing for 20 seconds;
- Palm stearin powder and sunflower oil were added, followed by mixing for 20 seconds;
- The dough mass so prepared was transferred into a bowl and put in a freezer to cool down to 1 °C (in 45 minutes);
- The dough mass was taken out of the freezer, mixed again for 20 seconds and shaped by hand into burger patties having a diameter of 12 cm and a thickness of 1 cm, using a patty shaper';
- The patties so obtained were frozen and stored at -21°C.

### Example 2

The vegan burgers of Example 1 were prepared for consumption by pan frying. One table spoon of sunflower oil was added to a 20cm diameter Tefal^{®} Teflon^{®} coated pan, which was placed on a medium heat gas stove to which the burger was added. The burger was pan fried for 4 minutes in total, 2 minutes on each side.

An expert panel (n=3) evaluated the appearance, taste and texture of the freshly prepared vegetarian burgers, using the attributes mentioned in Table 2. The vegan burger of Example 1 was compared to commercially available vegetarian burgers:
A ("Beyond Meat Burger", El Segundo, CA, USA),
B ("Incredible Burger", Garden Gourmet, Nestlé, Switzerland),

The vegan burger of Example 1 was found to be superior in terms of bite, chewing granularity, off-flavour, natural colour and fried appearance. Furthermore, the vegan burger of Example 1 was clearly preferred by the panel over the commercially available vegetarian burgers.

## Claims

1. A minced meat analogue comprising the following components:
(a) 30-80% by weight of the minced meat analogue of hydrated textured vegetable protein (TVP) pieces;
(b) 20-45% by weight of the minced meat analogue of a binder emulsion containing the following ingredients:
(b1) 8-50% by weight of the binder emulsion of liquid oil having a saturated fatty acid content of less than 30 wt.%
(b2) 8-50% by weight of the binder emulsion of particles of solid fat having a saturated fatty acid content of more than 50 wt.%; whereby said solid fat in the particles of solid fat has a solid fat content at 30°C of at least 25%, more preferably of at least 30% as determined using ISO method 8292-1:2008;
whereby preferably at least 80 wt.% of the particles of solid fat in the binder emulsion have a particle size, as determined by laser diffraction, of in the range of 30-350 µm.
(b3) 25-70% by weight of the binder emulsion of water;
wherein the combination of ingredients (b1), (b2) and (b3) constitutes at least 70 wt.% of the binder emulsion;
wherein the combination of components (a) to (b) constitutes at least 80 wt.% of the minced meat analogue; and the
protein content of the minced meat analogue preferably lies in the range of 10-20%, more preferably in the range of 12-18% by weight of the minced meat analogue.

2. Minced meat analogue according to claim 1, wherein the minced meat analogue is uncooked.

3. Minced meat analogue according to any one of the preceding claims, wherein the minced meat analogue contains, calculated by weight of the minced meat analogue, 12-20 wt.% protein, 8-22 wt.% fat and 50-70 wt.% water.

4. Minced meat analogue according to any one of the preceding claims, wherein the TVP pieces contain, calculated by weight of the dry matter of the TVP pieces, 50-80 wt.% protein, 0.5-5 wt.% fat and 3-30 wt.% dietary fiber.

5. Minced meat analogue according to any one of the preceding claims, wherein at least 80 wt.% of the total amount of protein of the TVP pieces is protein selected from soy protein, pea protein, gluten and combinations thereof.

6. Minced meat analogue according to any one of the preceding claims, wherein the solid fat is selected from palm stearin, palm mid fraction, hydrogenated vegetable oils and combinations thereof.

7. Minced meat analogue according to any one of the preceding claims, wherein the liquid oil and the particles of solid fat are present in the binder emulsion in a weight ratio that lies in the range of 1:3 to 3:1.

8. Minced meat analogue according to any one of the preceding claims, wherein the combined total amount of liquid oil and particles of solid fat constitutes 25-70% by weight of the binder emulsion.

9. Minced meat analogue according to any one of the preceding claims, wherein the binder emulsion contains 1-15% by weight of the binder emulsion of a heat-gelling binder selected from non-denatured patatin, non-denatured glycinin, non-denatured legumin, non-denatured egg protein, methyl cellulose and combinations thereof.

10. Minced meat analogue according to any one of the preceding claims, wherein the minced meat analogue comprises the following components:
(a) 50-72% by weight of the minced meat analogue of hydrated TVP pieces;
(b) 25-42% by weight of the minced meat analogue of a binder emulsion containing the following ingredients:
(b1) 12-30% by weight of the binder emulsion of liquid oil having a saturated fatty acid content of less than 30 wt.%
(b2) 15-32% by weight of the binder emulsion of particles of solid fat having a saturated fatty acid content of more than 50 wt.%;
(b3) 32-60% by weight of the binder emulsion of water;
wherein the combination of ingredients (b1), (b2) and (b3) constitutes at least 80 wt.% of the binder emulsion;
wherein the combination of components (a) to (b) constitutes at least 90 wt.% of the minced meat analogue.

11. A method of preparing a minced meat analogue according to any one of the preceding claims for consumption, said method comprising frying or grilling said minced meat analogue.

12. A process of preparing a minced meat analogue according to any one of the preceding claims 1 to 10, said process comprising:
i. mixing textured vegetable protein (TVP) particles with water to produce hydrated TVP pieces;
ii. mixing the hydrated TVP pieces with water, solid fat powder and liquid oil to produce a minced meat analogue whilst maintaining the temperature of the mixture below the melting point of the solid fat.

13. Process according to claim 12, TVP particles contain, calculated by weight of the dry matter contained therein, 50-80 wt.% protein, 0-5 wt.% fat and 3-30 wt.% dietary fiber, preferably 65-75 wt.% protein, 0.5-4 wt.% fat and 6-24 wt.% dietary fiber..

14. Process according to claim 12 or 13, wherein, during step ii, the temperature of the mixture is kept within the range of -5°C to 30°C.

15. Process according to any one of claims 12-14, wherein at least 80 wt.% of the particles of solid fat powder has a particle size, as determined by laser diffraction, of in the range of 35-350 µm.

## Patentansprüche

1. Hackfleischanalog, umfassend die folgenden Komponenten:
(a) 30-80 Gew.-% des Hackfleischanalogs hydratisierte texturierte Pflanzenprotein (TVP)-Stücke;
(b) 20-45 Gew.-% des Hackfleischanalogs einer Bindemittelemulsion, enthaltend die folgenden Zutaten:
(b1) 8-50 Gew.-% der Bindemittelemulsion flüssiges Öl mit einem Gehalt an gesättigter Fettsäure von weniger als 30 Gew.-%;
(b2) 8-50 Gew.-% der Bindemittelemulsion Partikel festen Fetts mit einem Gehalt an gesättigter Fettsäure von mehr als 50 Gew.-%; wobei das feste Fett in den Partikeln des festen Fetts einen Festfettgehalt bei 30°C von mindestens 25%, besonders bevorzugt von mindestens 30%, bestimmt unter Anwendung des ISO-Verfahrens 8292-1:2008, aufweist;
wobei vorzugsweise mindestens 80 Gew.-% der Partikel des festen Fetts in der Bindemittelemulsion eine Partikelgröße, bestimmt durch Laserbeugung, in dem Bereich von 30-350 µm aufweisen;
(b3) 25-70 Gew.-% der Bindemittelemulsion Wasser;
wobei die Kombination der Zutaten (b1), (b2) und (b3) mindestens 70 Gew.-% der Bindemittelemulsion ausmacht,
wobei die Kombination der Komponenten (a) bis (b) mindestens 80 Gew.-% des Hackfleischanalogs ausmacht und der Proteingehalt des Hackfleischanalogs vorzugweise in dem Bereich von 10-20 Gew.-%, besonders bevorzugt in dem Bereich von 12-18 Gew.-%, des Hackfleischanalogs liegt.

2. Hackfleischanalog nach Anspruch 1, wobei das Hackfleischanalog ungekocht ist.

3. Hackfleischanalog nach irgendeinem der vorhergehenden Ansprüche, wobei das Hackfleischanalog, berechnet nach Gewicht des Hackfleischanalogs, 12-20 Gew.-% Protein, 8-22 Gew.-% Fett und 50-70 Gew.-% Wasser enthält.

4. Hackfleischanalog nach irgendeinem der vorhergehenden Ansprüche, wobei die TVP-Stücke, berechnet nach Gewicht der Trockenmasse der TVP-Stücke, 50-80 Gew.-% Protein, 0,5-5 Gew.-% Fett und 3-30 Gew.-% Nahrungsfasern enthalten.

5. Hackfleischanalog nach irgendeinem der vorhergehenden Ansprüche, wobei mindestens 80 Gew.-% der Gesamtmenge des Proteins der TVP-Stücke Protein darstellen, ausgewählt aus Sojaprotein, Erbsenprotein, Gluten und Kombinationen davon.

6. Hackfleischanalog nach irgendeinem der vorhergehenden Ansprüche, wobei das feste Fett aus Palmstearin, Palmmittelfraktion, hydrierten Pflanzenölen und Kombinationen davon ausgewählt ist.

7. Hackfleischanalog nach irgendeinem der vorhergehenden Ansprüche, wobei das flüssige Öl und die Partikel des festen Fetts in der Bindemittelemulsion in einem Gewichtsverhältnis vorliegen, das in dem Bereich von 1:3 bis 3:1 liegt.

8. Hackfleischanalog nach irgendeinem der vorhergehenden Ansprüche, wobei die kombinierte Gesamtmenge des flüssigen Öls und der Partikel des festen Fetts 25-70 Gew.-% der Bindemittelemulsion ausmachen.

9. Hackfleischanalog nach irgendeinem der vorhergehenden Ansprüche, wobei die Bindemittelemulsion 1-15 Gew.-% der Bindemittelemulsion eines wärmegelierenden Bindemittels enthält, ausgewählt aus nicht-denaturiertem Patatin, nicht-denaturiertem Glycinin, nicht-denaturiertem Legumin, nicht-denaturiertem Eiprotein, Methylcellulose und Kombinationen davon.

10. Hackfleischanalog nach irgendeinem der vorhergehenden Ansprüche, wobei das Hackfleischanalog die folgenden Komponenten umfasst:
(a) 50-72 Gew.-% des Hackfleischanalogs hydratisierte TVP-Stücke;
(b) 25-42 Gew.-% des Hackfleischanalogs einer Bindemittelemulsion, enthaltend die folgenden Zutaten:
(b1) 12-30 Gew.-% der Bindemittelemulsion flüssiges Öl mit einem Gehalt an gesättigter Fettsäure von weniger als 30 Gew.-%;
(b2) 15-32 Gew.-% der Bindemittelemulsion Partikel festen Fetts mit einem Gehalt an gesättigter Fettsäure von mehr als 50 Gew.-%;
(b3) 32-60 Gew.-% der Bindemittelemulsion Wasser;
wobei die Kombination der Zutaten (b1), (b2) und (b3) mindestens 80 Gew.-% der Bindemittelemulsion ausmacht;
wobei die Kombination der Komponenten (a) bis (b) mindestens 90 Gew.-% des Hackfleischanalogs ausmacht.

11. Verfahren zur Herstellung eines Hackfleischanalogs nach irgendeinem der vorhergehenden Ansprüche zum Verzehr, wobei das Verfahren das Braten oder Grillen des Hackfleischanalogs umfasst.

12. Verfahren zur Herstellung eines Hackfleischanalogs nach irgendeinem der vorhergehenden Ansprüche 1 bis 10, wobei das Verfahren umfasst:
i. Mischen texturierter Pflanzenprotein (TVP)-Partikel mit Wasser, um hydratisierte TVP-Stücke herzustellen;
ii. Mischen der hydratisierten TVP-Stücke mit Wasser, festem Fettpulver und flüssigem Öl, um ein Hackfleischanalog herzustellen, während die Temperatur der Mischung unterhalb des Schmelzpunktes des festen Fetts gehalten wird.

13. Verfahren nach Anspruch 12, wobei die TVP-Partikel, berechnet nach Gewicht der darin enthaltenen Trockenmasse, 50-80 Gew.-% Protein, 0-5 Gew.-% Fett und 3-30 Gew.-% Nahrungsfasern, vorzugsweise 65-75 Gew.-% Protein, 0,5-4 Gew.-% Fett und 6-24 Gew.-% Nahrungsfasern, enthalten.

14. Verfahren nach Anspruch 12 oder 13, wobei während des Schritts ii die Temperatur der Mischung innerhalb des Bereichs von -5°C bis 30°C gehalten wird.

15. Verfahren nach irgendeinem der Ansprüche 12-14, wobei mindestens 80 Gew.-% der Partikel des pulverigen festen Fetts eine Partikelgröße, bestimmt durch Laserbeugung, in dem Bereich von 35-350 µm aufweisen.

## Revendications

1. Analogue de viande hachée comprenant les constituants suivants :
(a) 30-80 % en masse de l'analogue de viande hachée de pièces de protéine végétale texturée hydratée (TVP) ;
(b) 20-45 % en masse de l'analogue de viande hachée d'une émulsion de liant contenant les ingrédients suivants :
(b1) 8-50 % en masse de l'émulsion de liant d'huile liquide ayant une teneur en acide gras saturé inférieure à 30 % en masse
(b2) 8-50 % en masse de l'émulsion de liant de particules de graisse solide ayant une teneur en acide gras saturé supérieure à 50 % en masse ; sur quoi ladite graisse solide dans les particules de graisse solide présente une teneur en graisse solide à 30°C d'au moins 25 %, encore mieux d'au moins 30 % comme déterminé en utilisant la méthode ISO 8292-1:2008 ; sur quoi de préférence au moins 80 % en masse des particules de graisse solide dans l'émulsion de liant présentent une taille de particule, comme déterminé par diffraction laser, dans l'intervalle de 30-350 µm
(b3) 25-70 % en masse de l'émulsion de liant d'eau ;
dans lequel la combinaison d'ingrédients (b1), (b2) et (b3) constitue au moins 70 % en masse de l'émulsion de liant ;
dans lequel la combinaison de constituants (a) à (b) constitue au moins 80 % en masse de l'analogue de viande hachée ; et la teneur en protéine de l'analogue de viande hachée se trouve de préférence dans l'intervalle de 10-20 %, encore mieux dans l'intervalle de 12-18 % en masse de l'analogue de viande hachée.

2. Analogue de viande hachée selon la revendication 1, dans lequel l'analogue de viande hachée est cru.

3. Analogue de viande hachée selon l'une quelconque des revendications précédentes, dans lequel l'analogue de viande hachée contient, calculé en masse de l'analogue de viande hachée, 12-20 % en masse de protéine, 8-22 % en masse de graisse et 50-70 % en masse d'eau.

4. Analogue de viande hachée selon l'une quelconque des revendications précédentes, dans lequel les pièces de TVP contiennent, calculé en masse de la matière sèche des pièces de TVP, 50-80 % en masse de protéine, 0,5-5 % en masse de graisse et 3-30 % en masse de fibre diététique.

5. Analogue de viande hachée selon l'une quelconque des revendications précédentes, dans lequel au moins 80 % en masse de la quantité totale de protéine des pièces de TVP sont une protéine choisie parmi une protéine de soja, protéine de pois, du gluten et des combinaisons de ceux-ci.

6. Analogue de viande hachée selon l'une quelconque des revendications précédentes, dans lequel la graisse solide est choisie parmi la stéarine de palme, une fraction médiane de palme, des huiles végétales hydrogénées et des combinaisons de celles-ci.

7. Analogue de viande hachée selon l'une quelconque des revendications précédentes, dans lequel l'huile liquide et les particules de graisse solide sont présentes dans l'émulsion de liant dans un rapport de masse qui se trouve dans l'intervalle de 1:3 à 3:1.

8. Analogue de viande hachée selon l'une quelconque des revendications précédentes, dans lequel la quantité totale combinée d'huile liquide et de particules de graisse solide constitue 25-70 % en masse de l'émulsion de liant.

9. Analogue de viande hachée selon l'une quelconque des revendications précédentes, dans lequel l'émulsion de liant contient 1-15 % en masse de l'émulsion de liant d'un liant gélifiant à la chaleur choisi parmi de la patatine non-dénaturée, glycinine non-dénaturée, légumine non-dénaturée, protéine d'oeuf non-dénaturée, méthylcellulose et des combinaisons de celles-ci.

10. Analogue de viande hachée selon l'une quelconque des revendications précédentes, dans lequel l'analogue de viande hachée comprend les constituants suivants :
(a) 50-72 % en masse de l'analogue de viande hachée de pièces de TVP hydratée ;
(b) 25-42 % en masse de l'analogue de viande hachée d'une émulsion de liant contenant les ingrédients suivants :
(b1) 12-30 % en masse de l'émulsion de liant d'huile liquide présentant une teneur en acide gras saturé inférieure à 30 % en masse
(b2) 15-32 % en masse de l'émulsion de liant de particules de graisse solide présentant une teneur en acide gras saturé supérieure à 50 % en masse ;
(b3) 32-60 % en masse de l'émulsion de liant d'eau ;
dans lequel la combinaison d'ingrédients (b1), (b2) et (b3) constitue au moins 80 % en masse de l'émulsion de liant ;
dans lequel la combinaison des constituants (a) à (b) constitue au moins 90 % en masse de l'analogue de viande hachée.

11. Procédé de préparation d'un analogue de viande hachée selon l'une quelconque des revendications précédentes pour la consommation, ledit procédé comprenant la friture ou le grill dudit analogue de viande hachée.

12. Procédé de préparation d'un analogue de viande hachée selon l'une quelconque des revendications 1 à 10 précédentes, ledit procédé comprenant :
i. le mélange de particules de protéine végétale texturée (TVP) avec de l'eau pour produire des pièces de TVP hydratée ;
ii. le mélange des pièces de TVP hydratée avec de l'eau, de la poudre de graisse solide et de l'huile liquide pour produire un analogue de viande hachée tout en maintenant la température du mélange en dessous du point de fusion de la graisse solide.

13. Procédé selon la revendication 12, les particules de TVP contiennent, calculé en masse de la matière sèche contenue dans celles-ci, 50-80 % en masse de protéine, 0-5 % en masse de graisse et 3-30 % en masse de fibre diététique, de préférence 65-75 % en masse de protéine, 0,5-4 % en masse de graisse et 6-24 % en masse de fibre diététique.

14. Procédé selon la revendication 12 ou 13, dans lequel, pendant l'étape ii, la température du mélange est maintenue dans l'intervalle de -5°C à 30°C.

15. Procédé selon l'une quelconque des revendications 12-14, dans lequel au moins 80 % en masse des particules de poudre de graisse solide présentent une taille de particule, comme déterminée par diffraction laser dans l'intervalle de 35-350 µm.
